# EUROPEAN PATENT APPLICATION

(11) **EP 4 465 652 A1**
(43) Date of publication of application: **20.11.2024**
(21) Application number: 22957184.9
(22) Date of filing: 25.11.2022
(51) Int. Cl.: H04R 1/10

(54) **EARPIECE**

(30) Priority: 31.08.2022 WO PCT/CN2022/116224
(71) Applicant: Shenzhen Shokz Co., Ltd., Shenzhen, Guangdong 518108 (CN)
(72) Inventor: ZHAO, Tao, Shenzhen, Guangdong 518108 (CN); XU, Jiang, Shenzhen, Guangdong 518108 (CN); ZHENG, Zeying, Shenzhen, Guangdong 518108 (CN); ZHANG, Haofeng, Shenzhen, Guangdong 518108 (CN); HU, Cai, Shenzhen, Guangdong 518108 (CN)
(74) Representative: Wang, Bo
(86) International application number: PCT/CN2022/134435
(87) International publication number: WO 2024/045372

(57) **Abstract**

Embodiments of the present disclosure provide a headphone, including a compartment body assembly and an ear hook assembly. The compartment body assembly may be configured to contact the front side of an ear of a user, and at least a portion of the ear hook assembly may be provided between the rear side of the ear and the head of the user. The ear hook assembly may be detachably connected with the compartment body assembly, and a pullout resistance between the ear hook assembly and the compartment body assembly may be within a range of 0.45 kgf to

## Description

### CROSS-REFERENCE TO RELATED APPLICATIONS

This application claims priority to International Application No. PCT/CN2022/116224 filed on August 31, 2022, the entire contents of which are hereby incorporated by reference.

### TECHNICAL FIELD

This application relates to the technical field of electronic devices, and in particular, to a headphone.

### BACKGROUND

With the continuous proliferation of electronic devices, these electronic devices have become indispensable social and entertainment tools in people's daily lives. Consequently, the demand for electronic devices has been increasingly growing. Headphones, as a type of electronic device, have also been widely applied in daily life and can be used in conjunction with terminals such as mobile phones and computers to provide users with an auditory experience. According to the working principle, headphones can generally be categorized into air-conduction headphones and bone-conduction headphones. According to the way users wear headphones, headphones can generally be categorized into over-ear headphones, ear-hook headphones, and in-ear headphones. Furthermore, according to the interaction method between headphones and electronic devices, headphones can be categorized into wired headphones and wireless headphones. Specifically, for ear-hook headphones, they are typically hung on the user's ear and need to be clamped to the ear with a certain holding force to ensure stable wearing by the user. However, due to the differences in ear shapes, sizes, and other dimensions among different users, ear-hook headphones with a single shape and size in the ear-hook assembly pose technical problems such as discomfort during wearing, unstable fit, and poor acoustic performance when used by different users.

### SUMMARY

Embodiments of the present disclosure provide a headphone. The headphone may include a compartment body assembly and an ear hook assembly. The compartment body assembly may be configured to contact a front side of an ear of a user, and at least a portion of the ear hook assembly may be provided between a rear side of the ear and a head of the user. The ear hook assembly may be detachably connected with the compartment body assembly, and a pullout resistance between the ear hook assembly and the compartment body assembly may be within a range of 0.45 kgf to 5.7 kgf.

Embodiments of the present disclosure provide a headphone. The headphone may include a compartment body assembly and an ear hook assembly. The compartment body assembly may be configured to contact a front side of an ear of a user, and at least a portion of the ear hook assembly may be provided between a rear side of the ear and a head of the user. One of the compartment body assembly and the ear hook assembly may be provided with a fixing block, and another one of the compartment body assembly and the ear hook assembly may be provided with a groove for accommodating the fixing block. The fixing block may include a main portion and a limiting portion connected with the main portion. The groove may include a main groove portion for accommodating the main portion and a secondary groove portion for accommodating the limiting portion. The main groove portion may be provided with an elastic member. During the fixing block extending into the groove, the main portion moves within the main groove portion and compresses the elastic member, and the limiting portion moves within the secondary groove portion and abuts against an end of the secondary groove portion with an elastic support of the elastic member.

The beneficial effects of the present disclosure are as follows. The headphone provided in the present disclosure maybe hung on the ear of a user, and the ear hook assembly is detachably connected with the compartment body assembly of the headphone, so that they may be replaced when different users wear the headphone, or when the ear hook assembly is old or damaged. Accordingly, the technical problem such as wearing discomfort, wearing stability, poor acoustic effect may be improved. The pullout resistance between the ear hook assembly and the compartment body assembly is within a range of 0.45kgf to 5.7kgf, which is not only conducive to avoiding the pullout resistance being too small to lead to an insecure connection between the ear hook assembly and the compartment body assembly, but also conducive to avoiding that the pullout resistance being too large to make it difficult for the user to assemble and disassemble and avoiding excessive wear and tear of the compartment body assembly and the ear hook assembly, thus balancing the reliability of the connection and the wear and tear are balanced.

### BRIEF DESCRIPTION OF THE DRAWINGS

To more clearly illustrate the technical solutions related to the embodiments of the present disclosure, a brief introduction of the drawings referred to the description of the embodiments is provided below. Obviously, the drawings described below are only some examples or embodiments of the present disclosure. Those having ordinary skills in the art, without further creative efforts, may obtain other drawings according to these drawings.
FIG. 1 is a schematic diagram illustrating an exemplary headphone according to some embodiments of the present disclosure;
FIG. 2 is a schematic diagram illustrating an exemplary headphone worn on the ear according to some embodiments of the present disclosure;
FIG. 3 is a diagram illustrating results of an acoustic effect test of a sound effect of a headphone when a distance between a transducer and an ear concha cavity is different;
FIG. 4 is a schematic diagram illustrating two types of ear hook assemblies provided in an embodiment of the present disclosure, with (a) in FIG. 2 showing a structure of a first type of ear hook assembly and (b) in FIG. 4showing a structure of a second type of ear hook assembly;
FIG. 5 is a schematic diagram illustrating an exemplary compartment body assembly according to some embodiments of the present disclosure;
FIG. 6 is a schematic diagram illustrating a connection structure between an ear hook assembly and a compartment body assembly according to some embodiments of the present disclosure;
FIG. 7a is a schematic diagram illustrating the compartment body assembly in FIG. 6;
FIG. 7b is a schematic diagram illustrating the ear hook assembly in FIG. 6;
FIG. 8 is a schematic diagram illustrating a sectional view of a connection structure between an ear hook assembly and a compartment body assembly according to some other embodiments of the present disclosure;
FIG. 9a is a schematic diagram illustrating a compartment body assembly in FIG. 8;
FIG. 9b is a schematic diagram illustrating an ear hook assembly in FIG. 8;
FIG. 10 is a schematic diagram illustrating a connection structure between a first connection portion and a second connection portion according to some embodiments of the present disclosure;
FIG. 11a is a schematic diagram illustrating a first connection portion in FIG. 10;
FIG. 11b is a schematic diagram illustrating a second connection portion in FIG. 10;
FIG. 12 is a schematic diagram illustrating a headphone according to some other embodiments of the present disclosure;
FIG. 13 is a schematic diagram illustrating a disassembly y of a headphone according to some embodiments of the present disclosure;
FIG. 14 is a schematic diagram illustrating a cross-sectional view of an ear hook assembly in FIG. 13;
FIG. 15 is a schematic diagram illustrating a disassembly of a headphone according to some embodiments of the present disclosure;
FIG. 16 is a schematic diagram illustrating a cross-sectional view of an ear hook assembly in FIG. 15;
FIG. 17 is a schematic diagram illustrating a disassembly of a headphone according to some embodiments of the present disclosure; and
FIG. 18 is a schematic diagram illustrating a disassembly of a headphone according to some embodiments of the present disclosure.

### DETAILED DESCRIPTION

The present disclosure is described in further detail below in conjunction with the accompanying drawings and embodiments. In particular, it is noted that the following embodiments are only used to illustrate the present disclosure, but do not limit the scope of the present disclosure. Similarly, the following embodiments are only part of the embodiments of the present disclosure and not all of the embodiments, and all other embodiments obtained by a person of ordinary skill in the art without creative labor fall within the scope of protection of the present disclosure.

"Embodiments" in the present disclosure mean that particular features, structures, or characteristics described in conjunction with embodiments may be included in at least one embodiment of the present disclosure. It is understood by those of skill in the art, both explicitly and implicitly, that the embodiments described in the present disclosure may be combined with other embodiments.

The present disclosure is described in detail below in connection with the accompanying drawings and embodiments.

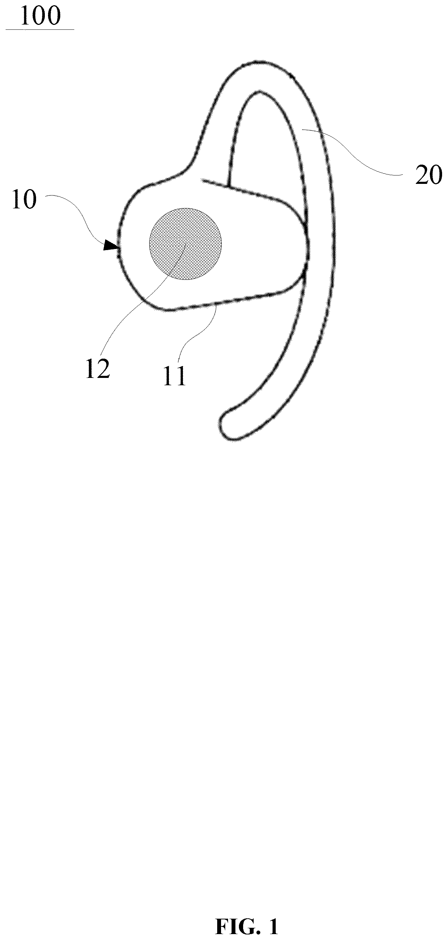

Referring to FIG. 1, FIG. 1 is a schematic diagram illustrating an exemplary headphone 100 according to some embodiments of the present disclosure. In the present embodiment, the headphone 100 is provided, and the headphone 100 includes a compartment body assembly 10 and an ear hook assembly 20. The compartment body assembly 10 includes a housing and a transducer. The housing is configured to accommodate the transducer, and the transducer may be configured to convert an electrical signal into an acoustic signal to provide sound to a user and/or may be configured to collect sound to convert sound in an outer environment within a certain distance into the electrical signal. The ear hook assembly 20 is connected with the compartment body assembly 10 for holding the compartment body assembly 10 at a predetermined position on the ear while wearing the headphone 100 and also effectively preventing the headphone 100 from falling off from the ear.

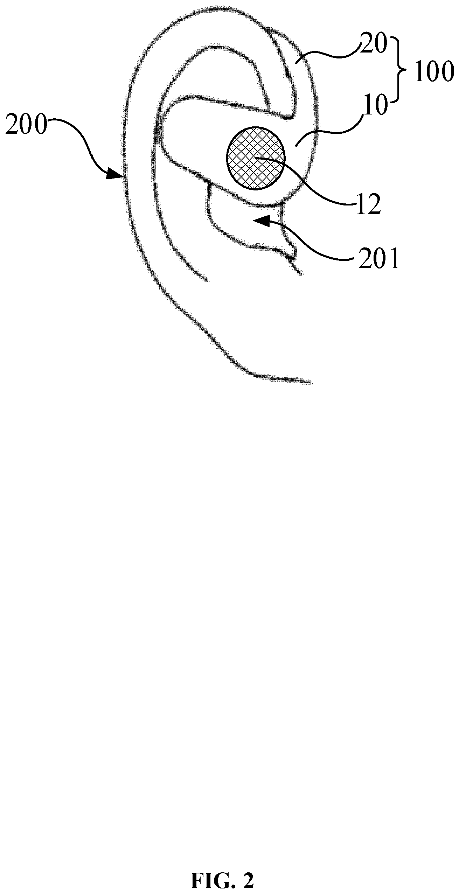

Referring to FIG. 2, FIG. 2 is a schematic diagram illustrating an exemplary headphone worn on the ear according to some embodiments of the present disclosure. In this embodiment, when the headphone 100 is worn on the ear 200, the compartment body assembly 10 is kept within a range of the ear concha cavity 201 on the front side of the ear 200, so that the transducer 12 provided in the housing 11 is kept within the range of the ear concha cavity 201, thereby enabling the headphone 100 to achieve better sound effect.

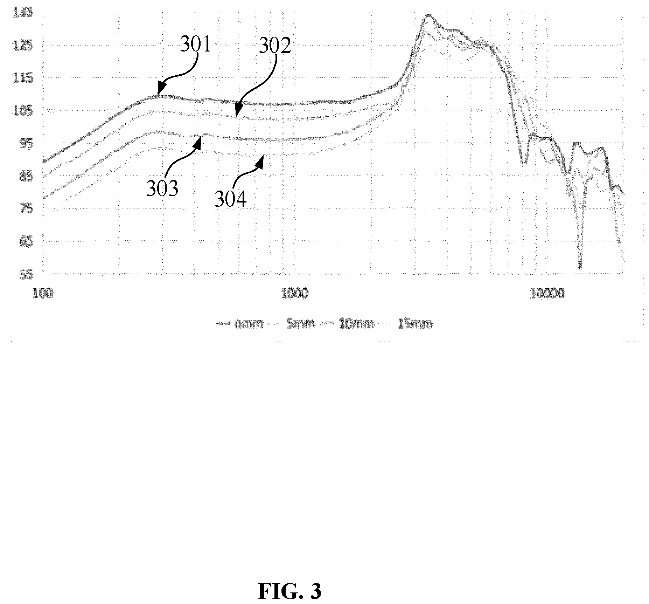

Referring to FIG.3, FIG. 3 is a diagram illustrating results of an acoustic effect test of a sound effect of a headphone when the distance between a transducer and an ear concha cavity is different. The figure shows an acoustic effect graph of an acoustic test of the headphone 100 when the distance between the transducer 12 and the ear canal is different. The horizontal coordinate indicates the frequency of the sound in Hertz (Hz), and the vertical coordinate indicates the loudness of the sound in decibels (dB). The results of the test were obtained in case the other conditions were the same and the distance between the transducer 12 and the ear canal was changed only, i.e., the result is obtained by using the method of controlling variables in multiple tests. The different lines in the figure indicate acoustic effects of the headphone 100 when the distance between the transducer 12 and the ear canal is different. The results includes that test result 301 obtained under 0 mm distance, test result 302 obtained under 5 mm distance , test result 303 obtained under 10 mm distance, and test result 304 obtained under 15 mm distance . It may be seen from the figure that, at the same frequency, the test result 301 obtained under 0 mm distance, the test result 302 obtained under 5 mm distance, the test result 303 obtained under 10 mm distance, and the test result 304 obtained under 15 mm distance are sequentially lower in loudness. Thus, it is found that the closer the transducer 12 is to the ear concha cavity 201, the louder the measured loudness of the sound of the headphone 100. It can be seen that the closer the transducer 12 is to the ear canal, the better the acoustic effect of the headphone 100. As shown in FIG. 2, the ear concha cavity 201 is closest to the ear canal, thus keeping the transducer 12 within the ear concha cavity 201 enables the headphone 100 to achieve a better acoustic effect.

Generally, different users have different ear shapes, e.g., the size of a contour, the shape, and the thickness of the ear 200, the size of the range of the ear concha cavity 201, and the transverse and longitudinal sizes of the ear 200 are different. Therefore, when the headphone 100 with the same shape and size of the ear hook is worn by different users, it is very easy to have the problem that the compartment body assembly 10 cannot be accurately kept in the ear concha cavity 201 due to the mismatch between the ear hook assembly 20 and the ear shapes of the users. That is, the transducer 12 may not be kept in the range of the ear concha cavity 201, resulting in the problem of deterioration in the acoustic effect of the headphone 100. Meanwhile, it is also easy to have the problem of deterioration in wearing comfort due to the mismatch between the ear hook assembly 20 and the ear shapes of the users, resulting in poor wearing comfort and poor wearing stability and easy falling off from the ear 200.

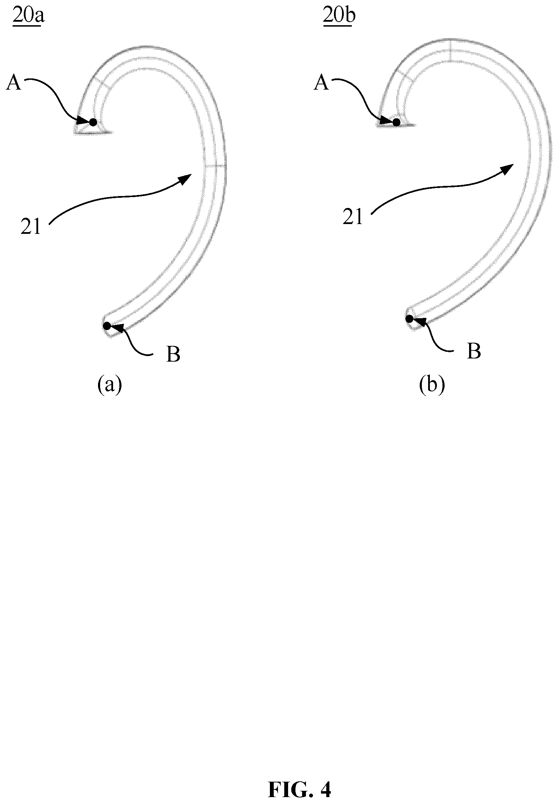

Referring to FIG. 4, FIG. 4 is a schematic diagram illustrating two types of ear hook assemblies provided in an embodiment of the present disclosure, with (a) in FIG. 2 showing a structure of a first type of ear hook assembly and (b) in FIG. 4 showing a structure of a second type of ear hook assembly. The present embodiment provides the headphone 100 including at least two ear hook assemblies 20, and the at least two ear hook assemblies 20 may be interchangeably connected with the compartment body assembly 10. The at least two ear hook assemblies 20 have different curved settings to adapt to ear shapes of different users, thereby solving the technical problems analyzed above. It can be understood that the headphone 100 provided in this embodiment has a split structure between the compartment body assembly 10 and the ear hook assemblies 20, which makes the ear hook assemblies 20 of the headphone 100 replaceable, and allows the user to choose a set of ear hook assemblies 20 that is suitable for his or her ear shape to connected to the compartment body assembly 10, to enable the transducer 12 to remain within the range of the ear concha cavity 201 while being worn. Thus, the headphones 100 may achieve a better acoustic effect, and at the same time, the wearing comfort and the wearing stability of the headphone on the user may be improved, to avoid the above problem.

Further, in order to improve the wearing comfort of the headphone 100, each of the ear hook assemblies 20 is at least partially a flexible structure 21, i.e., each of the ear hook assemblies 20 is at least partially soft, to make the flexible structure 21 of each of the ear hook assemblies 20 deformed to better fit the ear 200 when the headphone 100 is worn on the ear 200, avoiding each of the ear hook assemblies 20 from compressing the ear 200 that may result in lower wearing comfort and causing the user to experience pressure pain when wearing it for a long time. The flexible structure 21 may undergo a recoverable deformation or an elastic deformation. Specifically, the each of the ear hook assemblies 20 may be the flexible structure 21 to allow for a higher wearing comfort of each of the ear hook assemblies 20. Further, to increase the stability of the connection between each of the ear hook assemblies 20and the compartment body assembly 10, each of the ear hook assemblies 20 may have a Shore hardness higher than that of the other parts of the flexible structure 21, i.e., each of the ear hook assemblies 20 is the flexible structure 21 in addition to the part of each of the ear hook assemblies 20 at the connection with the compartment body assembly 10, so that each of the ear hook assemblies 20 may be stably connected with the compartment body assembly 10 and the part in contact with the ear 200 is of the flexible structure 21, and the wearing comfort is improved.

Specifically, in a wearing state, the flexible structure 21 extends from a front side of the ear 200 to a rear side of the ear 200 along an outer contour of the ear 200, to enable the flexible structure 21 to be hung between the rear side of the ear 200 and the head. Furthermore, to improve the wearing stability of the headphone 100, the flexible structure 21 includes at least one contact point at the rear side of the ear 200 or the head, resulting in a static friction between the flexible structure 21 and the ear 200 or the head. At the same time, a portion of the flexible structure 21 in contact with the ear 200 and/or the head is a rough surface, to increase the friction force between the flexible structure 21 and the ear 200 or the head, improving the wearing stability of the headphone 100, avoiding the occurrence of the headphone 100 shaking or falling off from the ear 200 in the wearing state.

As shown in FIG. 4, only the flexible structure 21 of each of the ear hook assemblies 20 is shown in the drawing, and the connection structure in which the each of the ear hook assemblies 20 is connected with the compartment body assembly 10 is not shown. Detailed descriptions regarding the connection structure may be found hereinafter, and will not be described here. In this embodiment, the headphone 100 includes at least two ear hook assemblies 20, with the flexible structures 21 of the two ear hook assemblies 20 having different curved settings. It should be noted that different curved settings may be of the same curvature and different sizes, of different curvatures and the same size, or of different curvatures and different sizes. In the present embodiment, each of the ear hook assemblies 20 includes a connecting end A and a free end B, and a portion between the connecting end A and the free end B is the flexible structure 21. When each of the ear hook assemblies 20 is connected with the compartment body assembly 10, the connecting end A is connected to the compartment body assembly 10 via the connection structure. The flexible structure 21 is curved to extend from the connecting end A to the free end B in the form of a hook to match the outer contour of the ear 200. In the wearing state, the flexible structure 21 extends, along the outer contour of the ear portion 200, from the front side of the ear 200 to the rear side of the ear 200, to be hooked to the ear 200 to keep the compartment body assembly 10 within the ear concha cavity of the ear 200.

In this embodiment, two ear hook assemblies 20 (ear hook assembly 20a and ear hook assembly 20b) with different curved settings are provided, and the curvature of the ear hook assembly 20a in (a) of FIG. 4 decreases gradually from the connecting end A to the free end B, to match the shape of the outer contour of the ear 200. At the same time, the transverse size of the ear hook assembly 20a is set to be smaller, making the ear hook assembly 20a to be narrower in the transverse direction, which may be suitable for the ear 200 with an ear shape with a smaller transverse size. The transverse direction is the direction of the ear hook assembly 20a perpendicular to the direction of the height of the user in the wearing state. The curvature of the ear hook assembly 20b in (b) of FIG. 4 decreases gradually from the connecting end A to the free end B to match the shape of the outer contour of the ear 200. The overall curvature of the ear hook assembly 20b is smaller than the overall curvature of the ear hook assembly 20a as compared to the ear hook assembly 20a in (a) of FIG. 4, to be adapted to a user with a larger ear shape. At the same time, the transverse size of the ear hook assembly 20b is larger, making the ear hook assembly 20b to be wider in the transverse direction, which may be adapted to the ear 200 with an ear shape with a larger transverse size. In other embodiments, the size of the ear hook assembly 20 in a vertical direction may be further set to obtain more ear hook assemblies 20 adapting to a greater number of ear shapes. In addition, by setting a size of a front portion of the ear hook assembly 20 extending, along the outer contour of the ear 200, from the front side of the ear 200 to the rear side of the ear 200, the size of the ear hook that may accommodate thicknesses of different ears 200 may be obtained.

In the present embodiment, the headphone 100 may further include at least two ear hook assemblies 20, and at least a portion of the ear hook assemblies 20 may include a flexible structure 21, so that the flexible structure 21 of each of the ear hook assemblies 20 may be deformed to better fit the ear 200 when the headphone 100 is worn on the ear 200, improving the wearing comfort of the headphone 100, and avoiding the discomfort caused by the ear hook assembly 20 and the compartment body assembly 10 being worn in the ear 200 for a long time. At the same time, flexible structures 21 of the at least two ear hook assemblies 20 may have different curved settings, so that the at least two ear hook assemblies 20 may be adapted to different ear shapes. In addition, the at least two ear hook assemblies 20 are interchangeably connected with the compartment body assembly 10, so that the headphone 100 may be adapted to different ear shapes. Therefore, the wearing stability of the headphone 100 may be improved, and the compartment body assembly 10 may be stably maintained within the ear concha cavity 201, thereby enabling the transducer 12 provided in the housing 11 to be stably maintained within the ear concha cavity 201, to enable the headphone 100 to achieve better acoustic effect when worn in different ear shapes of the ear 200.

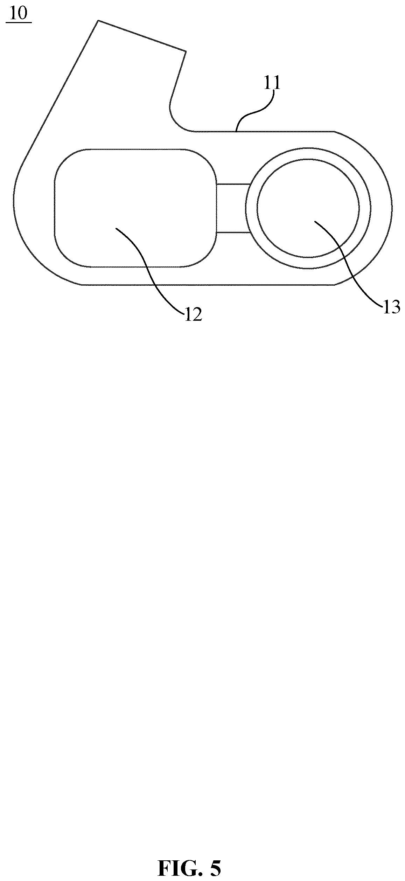

Referring to FIG. 5, FIG. 5 is a schematic diagram illustrating an exemplary compartment body assembly according to some embodiments of the present disclosure. In this embodiment, the headphone 100 further include a battery module 13s provided within a housing 11 and electrically connected with a transducer 12 to supply power to the transducer 12. In the present embodiment, the battery module 13 is provided in the housing 11, which makes the power supply structure of the headphone 100 simpler, and at the same time, reduces the weight of the ear hook assembly 20, reducing or avoiding the discomfort caused by the pressure of the ear hook assembly 20 on the ear 200 when worn for a long time. Specifically, in this embodiment, the headphone 100 is also provided with a charging interface, the charging interface is provided in the housing 11, and the battery module 13 is electrically connected with the charging interface, so that the battery module 13 may store electrical energy through the charging interface to provide a power supply to the transducer. In other embodiments, the charging interface may also be provided in the ear hook assembly 20, which is not limited here, as long as it may be electrically connected with the battery module 13 to enable the battery module 13 to store electrical energy. Certainly, in other embodiments, the battery module 13 of the headphone 100 may be replaceable, so that after the battery module 13 is depleted or damaged, the battery module 13 may be replaced with a new battery module 13 to power the transducer 12. Therefore, the service life of the headphone 100 may be increased by continuing to use the headphone 100 by replacing the battery module 13 when there are no rechargeable conditions or when the battery module 13 is damaged.

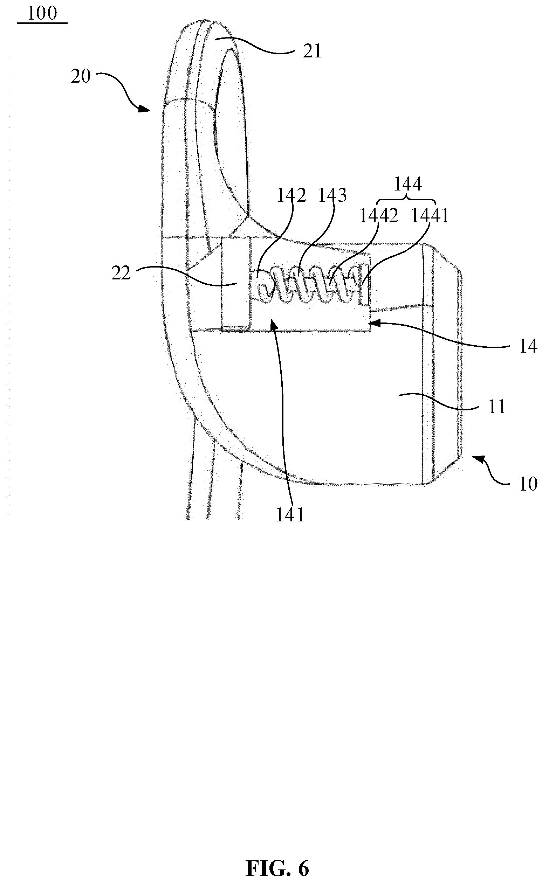

Referring to FIG. 6, FIG. 6 is a schematic diagram illustrating a connection structure between an ear hook assembly and a compartment body assembly according to some embodiments of the present disclosure. In this embodiment, the compartment body assembly 10 is provided with a first connection portion 14, and the ear hook assembly 20 is provided with a second connection portion 22. The second connection portion 22 is detachably connected with the first connection portion 14 for detachably connecting any set of ear hook assemblies provided in the above-mentioned embodiment to the compartment body assembly 10, thereby realizing at least two ear hook assemblies 20 interchangeably connected to the compartment body assembly 10. The first connection portion 14 is provided with an insertion groove 141, and the second connection portion 22 is provided with an insertion post 221. The insertion post 221 is matched with the insertion slot 141 so that the insertion post 221 is inserted in the insertion slot 141, thereby connecting the ear hook assembly 20 to the compartment body assembly 10.

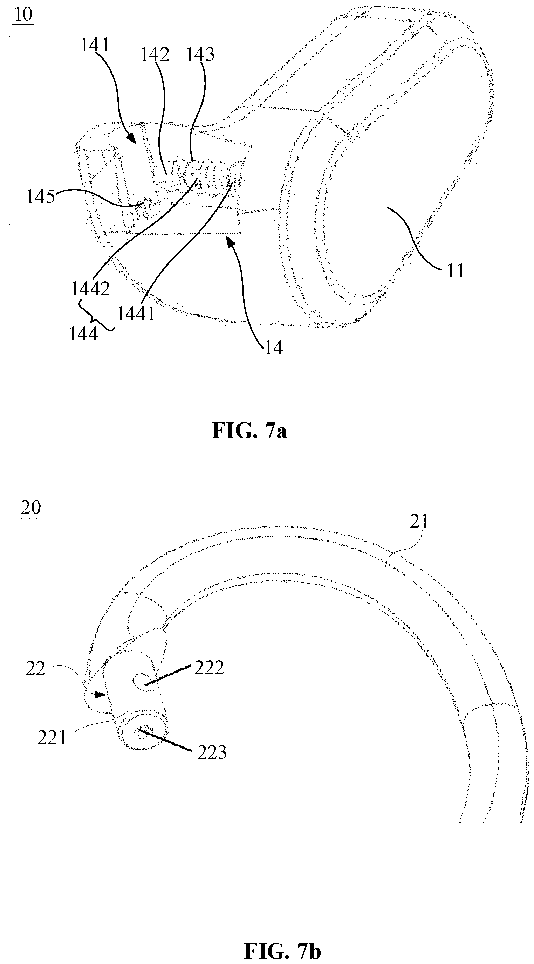

Referring to FIG.7a and FIG.7b, FIG. 7a is a schematic diagram illustrating the compartment body assembly in FIG. 6, and FIG. 7b is a schematic diagram illustrating the ear hook assembly in FIG. 6. In this embodiment, the first connection portion 14 further includes a limiting member 142 and an elastic member 143. The elastic member 143 is configured to elastically support the limiting member 142, and at least a part of the limiting member 142 is located in the insertion groove 141. Therefore, the limiting member 142 is squeezed when the insertion post 221 of the second connection portion 22 is inserted into the insertion groove 141, causing the elastic member 143 to be elastically deformed to generate a support force on the limiting member 142, thereby causing the limiting member 142 to limit the insertion post 221. Specifically, in this embodiment, the elastic member 143 may be a spring, and the limiting member 142 may be a ball. The first connection portion 14 further includes a base 144 provided inside the housing 11, which may be fixed in the housing 11 through an adhesive or a screw, or the like, for supporting the elastic member 143. Further, the base 144 includes a fixing portion 1441 and a guiding shaft 1442, and the fixing portion 1441 is fixed in the housing 11. The guiding shaft 1442 is a column, an end of which is connected with the fixing portion 1441, and the fixing portion 1441 and the guiding shaft 1442 may be specifically molded in one piece to facilitate production. The guiding shaft 1442 is perpendicular to the insertion post 221 when the insertion post 221 is inserted in the insertion groove 141. A spring is provided on the guiding shaft 1442 for limiting the spring to prevent the spring from radially wobbling. One end of the spring abuts against the bottom portion of the base 144 and is fixed to the base 144 through adhesive, welding, or the like. The other end of the spring is connected to the ball, which is fixed to the spring as an integral part by welding or other fixing means. It is understandable that, in other embodiments, the insertion groove 141 may also be provided in the second connection portion 22, the elastic member 143 and the limiting member 142 are also correspondingly provided in the second connection portion 22, and the insertion post 221 is correspondingly provided in the first connection portion 14, so that the ear hook assembly 20 may be detachably connected with the compartment body assembly 10.

As shown in FIG. 7b, corresponding to the limiting member 142, a locking groove 222 is provided on a side wall of the insertion post 221, and the locking groove 222 is matched with the limiting member 142. Specifically, after the insertion post 221 is inserted into the insertion groove 141, the limiting member 142 is squeezed, which causes the elastic deformation of the elastic member 143 to provide an elastic force to the limiting member 142. Thus, after the stopping groove 222 is partially embedded in the limiting member 142, the insertion post 221 is locked in the insertion groove 141. In this embodiment, the spring and ball allow the ear hook assembly 20 to be connected with the compartment body assembly 10. At the same time, due to the spherical structure of the ball, the insertion or withdrawal of the insertion post 221 into or from the insertion groove 141 is smoother, reducing the obvious frustration caused by overcoming the resistance of the limiting member 142 during the insertion and withdrawal, thus enhancing the sense of use of connection or removal between the ear hook assembly 20 and the housing component 10.

Further, in order to avoid a rotation after attaching the ear hook assembly 20 to the compartment body assembly 10 to affect wearing, the bottom wall of the insertion groove 141 is also provided with a first limiting structure 145. Corresponding to the first limiting structure 145, an end portion of the insertion post 221 is provided with a second limiting structure. The first limiting structure 145 matches the second limiting structure to limit the circumferential direction of the insertion post 221 after the insertion post 221 is inserted into the insertion groove 141, to prevent the ear hook assembly 20 from rotating with respect to the compartment body assembly 10 to affect the wearing of the ear hook assembly 20. Specifically, as shown in FIG. 7a and FIG. 7b, in this embodiment, the first limiting structure 145 is a "cross" bone position. Correspondingly, the second limiting structure is a "cross" groove, so that after the insertion post 221 is inserted into the insertion groove 141, the "cross" bone position is embedded in the "cross" groove, thereby limiting the circumferential direction of the insertion post 221 to prevent the ear hook assembly 20 from rotating relative to the compartment body assembly 10. Certainly, in other embodiments, the first limiting structure 145 and the second limiting structure may be other structures, which are not limited here, as long as it is possible to limit the circumferential direction of the insertion post 221.

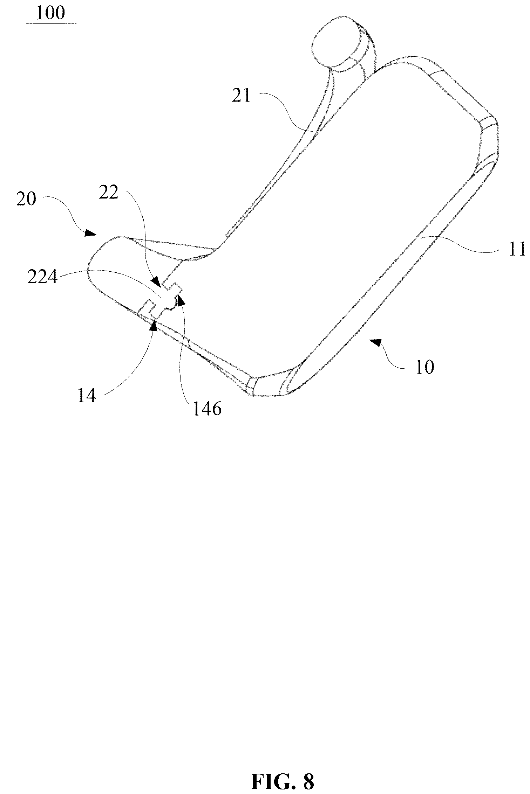

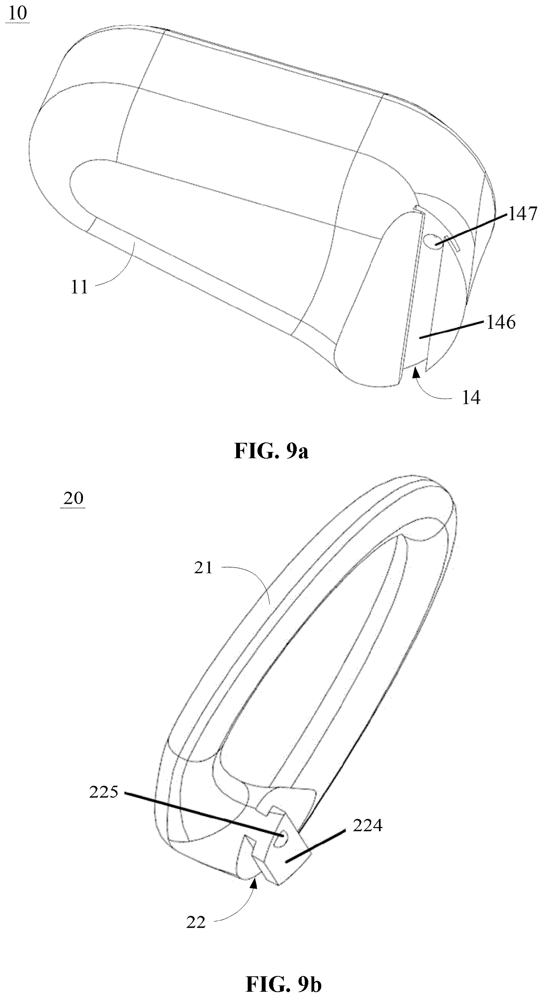

Referring to FIG.8, FIG.9a and FIG.9b, FIG. 8 is a schematic diagram illustrating a sectional view of a connection structure between an ear hook assembly and a compartment body assembly according to some other embodiments of the present disclosure, FIG. 9a is a schematic diagram illustrating a compartment body assembly in FIG. 8, and FIG. 9b is a schematic diagram illustrating an ear hook assembly in FIG. 8. In this embodiment, the first connection portion 14 is provided with a caulking groove 146, and the second connection portion 22 is provided with a caulking block 224. The inlay block 224 is matched with the caulking groove 146 to allow the caulking block 224 to be inserted into the caulking groove 146. The caulking groove 146 and the caulking block 224 are set in a wedge shape along an insertion direction of the caulking block 224 relative to the caulking groove 146, i.e., the caulking groove 146 is a wedge-shaped groove, and the caulking block 224 is a wedge-shaped block matching the wedge-shaped groove, so that after the caulking block 224 is inserted into the wedge-shaped groove, the first connection portion 14 and the second connection portion 22 may be fixedly connected to realize a fixed connection between the ear hook assembly 20 and the compartment body assembly 10. Specifically, as shown in FIG. 8, in a cross-section perpendicular to the insertion direction of the caulking block 224, the caulking groove 146 and the caulking block 224 are set in the T shape and match with each other, so that the insert block 224 is limited in a direction perpendicular to the bottom wall of the caulking groove 146, thereby preventing the ear hook assembly 20 from falling off the compartment body assembly 10 in the direction perpendicular to the bottom wall of the caulking groove 146. It is to be understood that, in other embodiments, the caulking groove 146 may also be provided in the second connection portion 22, and the caulking block 224 may be correspondingly provided in the first connection portion 14. Thus, after the caulking block 224 is inserted into the wedge-shaped groove, the first connection portion 14 and the second connection portion 22 may be fixedly connected, thereby realizing the fixed connection between the ear hook assembly 20 and the compartment body assembly 10.

Further, as shown in FIG. 9a and FIG. 9b, a positioning hole 147 is also provided in the wall of the caulking groove 146, and corresponding to the positioning hole 147, a side wall of the caulking block 224 is provided with a positioning bump 225. After the caulking block 224 is inserted into the caulking groove 146, the positioning bump 225 cooperates with the positioning hole 147, and the positioning bump 225 is embedded into the positioning hole 147 to lock the caulking block 224 into the caulking groove 146, thereby limiting the caulking block 224 in the insertion direction of the caulking block 224 relative to the caulking groove 146, and preventing the caulking block 224 from slipping relative to the caulking groove 146 or sliding out of the caulking groove 146 resulting in the ear hook assembly 20 falling out of the compartment body assembly 10. Specifically, the positioning hole 147 may be provided on the bottom wall and/or on the side wall of the caulking groove 146. Corresponding to the positioning hole 147, the positioning bump 225 may be provided on the side wall of the caulking block 224. The specific positions of the positioning hole 147 and the positioning bump 225 are not specifically limited, as long as the caulking block 224 may be limited in the insertion direction of the caulking block 224 relative to the caulking groove 146. It will be appreciated that, in other embodiments, the positioning hole 147 may also be provided on the side wall of the caulking block 224, and the positioning bump 225 is correspondingly provided on the wall of the caulking groove 146 to limit the caulking block 224 in the insertion direction of the caulking block 224 relative to the caulking groove 146.

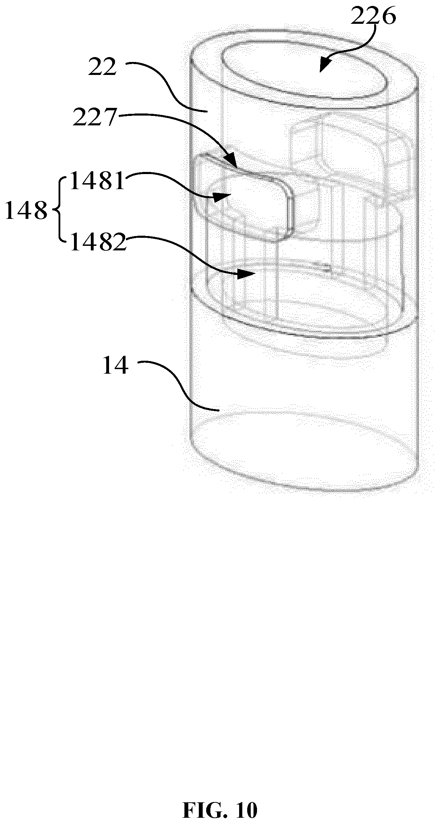

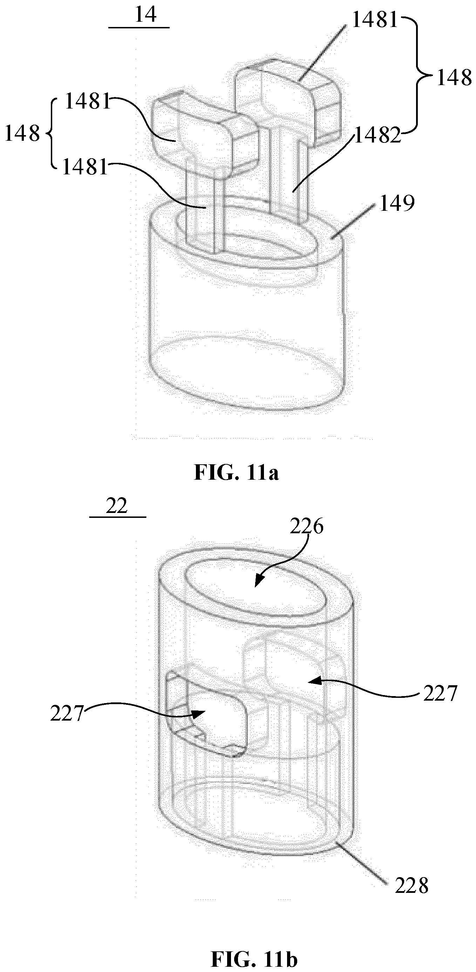

Referring to FIG. 10, FIG. 1 1a and FIG. 1 1b, FIG. 10 is a schematic diagram illustrating a connection structure between a first connection portion and a second connection portion according to some embodiments of the present disclosure, FIG. 11a is a schematic diagram illustrating a first connection portion in FIG. 10, and FIG. 11b is a schematic diagram illustrating a second connection portion in FIG. 10. In this embodiment, the first connection portion 14 and the second connection portion 22 are a snap-fit connection structure. Two snaps 148 are provided opposite to each other on an end portion of the first connection portion 14. A snap 148 include a connection post 1481 and a bump 1482. One end of the connection post 1481 is connected to a first end surface 149 of the first connection portion 14. The first end surface 149 of the first connection portion 14 is a surface close to the second connection portion 22. The other end of the connection post 1481 is connected to the bump 1482. The connection post 1481 has a certain deflection degree to make the connection post 1481 have a certain degree of elasticity. The second connection portion 22 is correspondingly provided with a slot 226. A bayonet 227 is provided on a side wall of the slot 226 corresponding to the bump 1482, and the bayonet 227 is matched with the bump 1482. Thus, by pressing the bump 1482 when assembled, the connection post 1481 is elastically deformed so that the snaps 148are inserted into the slot 226. Then the bump 1482 is embedded in the bayonet 227 to lock the snaps 148 in the slot 226, thereby fixedly connecting the ear hook assembly 20 to the compartment body assembly 10. Specifically, the shape of the snaps 148 may be adjusted according to the comprehensive form of the ear hook assembly 20 as well as the ergonomics and other factors, such as a rounded shape, a ring shape, etc., to realize user-friendly pressing, reliable connection, and controllable weight and volume.

Further, when the second connection portion 22 is connected to the first connection portion 14, the first end surface 149 of the first connection portion 14 overlaps with a second end surface 228 of the slot 226 of the second connection portion 22. The first end surface 149 of the first connection portion 14 and the second end surface 228 of the slot 226 of the second connection portion 22 may be a matching wavy or toothed structure, thereby optimizing the reliability of the connection between the first connection portion 14 and the second connection portion 22 in scenarios such as resistance to torsion as well as transverse impact forces.

The structure of the first connection portion 14 and the second connection portion 22 provided in this embodiment is simple and reliable, which avoids the introduction of redundant weights. At the same time, the snap connection structure does not affect the internal structure of the first connection portion 14 and the second connection portion 22. For example, lines, deformed titanium wires, or other combined materials, etc., may be introduced internally.

In some embodiments, the first connection portion 14 and the second connection portion 22 may be set up as a connection structure of a magnetically attractable snap. The first connection portion 14 and the second connection portion 22 are respectively set up with magnetic members of different magnetism to realize a connection between the first connection portion 14 and the second connection portion 22. Alternatively, the first connection portion 14 and the second connection portion 22 are respectively provided with a magnetic member and a magnetically attractable metal member to realize the connection between the first connection portion 14 and the second connection portion 22.

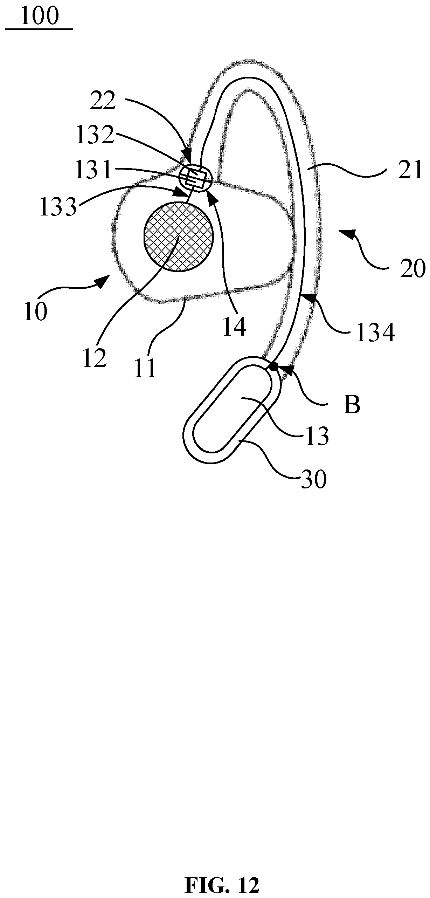

Referring to FIG. 12, FIG. 12 is a schematic diagram illustrating a structure of a headphone according to some other embodiments of the present disclosure. In this embodiment, the ear hook assembly 20 further includes a battery compartment 30, a battery module 13 is provided in the battery compartment 30, and the battery module 13 is electrically connected to the transducer 12 to supply power to the transducer 12. Specifically, the battery compartment 30 may be provided within the housing 11 or provided at the free end B of the flexible structure 21 of the ear hook assembly 20. The battery compartment 30 is provided within the housing 11 for accommodating and protecting the battery module 13. The structure and function of the battery module 13 are the same as or similar to those of the embodiment in FIG. 5, the same or similar technical effect may be realized, as described above, and will not be described herein.

In this embodiment, the battery compartment 30 is provided at the free end B of the flexible structure 21 of the ear hook assembly 20, and the battery assembly is provided within the battery compartment 30 and electrically connected to the transducer 12 within the housing 11. Specifically, the headphone 100 further includes a first power supply interface 131 provided at the first connection portion 14 and a second power supply interface 132 provided at the second connection portion 22. The first power supply interface 131 may be electrically connected to the transducer 12 within the housing 11 via a first connection wire 133, and the second power supply interface 132 may be electrically connected to the battery module 13 via a second connection wire 134. The second connection wire 134 is provided inside the ear hook assembly 20, and extends, along the flexible structure 21, from the second power supply interface 132 to the battery compartment 30 and is electrically connected to the battery module. When the ear hook assembly 20 is assembled to the compartment body assembly 10, i.e., when the second connection portion 22 is connected with the first connection portion 14, the first power supply interface 131 butts up against the second power supply interface 132 so that power from the battery module 13 is transmitted to the transducer 12 along the second connection wire 134, the second power supply interface 132, the first power supply interface 131, and the first connection wire 133, to realize the power supply of the battery module 13 to the transducer 12. In the present embodiment, by setting the battery module 13 at the free end B of the flexible structure 21 of the ear hook assembly 20, the volume and weight of the compartment body assembly 10 may be reduced, and the weight of the headphone 100 may be more evenly distributed at two ends. When the headphone 100 is worn on the ear 200, the ear 200 may be used as a pivot point to support the headphone 100 so that the headphone 100 is not easily dislodged from the ear 200. Meanwhile, the reduced volume of the compartment body assembly 10 may make it easier for the compartment body assembly 10 to be retained within the ear concha cavity 201, thereby improving the acoustic effect of the headphone 100. In this embodiment, the specific structure and function of the first connection portion 14 and the second connection portion 22 are the same as or similar to those of the first connection portion 14 and the second connection portion 22 as described in the above embodiment, which may realize the same technical effects as described above and will not be repeated herein.

Similarly, in this embodiment, the headphone 100 is further provided with a charging interface, which may be provided in the battery compartment 30. The battery module 13 is electrically connected with the charging interface, such that the battery module 13 may store electrical energy through the charging interface to supply power to the transducer 12. In other embodiments, the charging interface may be provided on the ear hook assembly 20 or the compartment body assembly 10, without specific limitation, as long as it may be electrically connected with the battery module 13 to enable the battery module 13 to store electrical energy. Certainly, in other embodiments, the battery module 13 of the headphone 100 may be replaceable, so that after the battery module 13 is depleted of power or damaged, the battery module 13 may be replaced with a new battery module 13 to power the transducer 12. Therefore, when there is no rechargeable condition or when the battery module 13 is damaged, the headphone 100 may be continued to be used by replacing the battery module 13, thereby increasing the service life of the headphone 100.

The inventor of the present disclosure further discovered in the course of long-term research and development that: setting up the headphone 100 to include at least two ear hook assemblies 20 having different shapes, sizes, and other dimensions may greatly satisfy the need for the headphone 100 to be worn by different users, or setting the headphone 100 to include at least two ear hook assemblies 20 having the same shape, size, and other dimensions may greatly satisfy the need for the headphone 100 to be replaced with a new ear hook assembly 20 after any set of the ear hook assemblies 20 has been used to be old and damaged, but there may be technical problems such as deterioration in the reliability of the connection between the compartment body assembly 10 and the ear hook assembly 20 after multiple substitutions by the user. In this regard, the present disclosure further proposes the following embodiments.

For example, the headphone 100 may include a compartment body assembly 10 and an ear hook assembly 20 connected with the compartment body assembly 10. The compartment body assembly 10 is configured to contact the front side of the ear of the user, such as the compartment body assembly 10, in the wearing state, partially covering the ear concha cavity the ear. At least a portion of the ear hook assembly 20 is configured to hang between the rear side of the ear and the head of the user to enable the headphone 100 to hang on the ear of the user in the wearing state and prevent the outer ear canal of the ear from being blocked. Based on this, the ear hook assembly 20 is detachably connected with the compartment body assembly 10 to be replaced when the headphone 100 is worn by different users or when the ear hook assembly 20 is old or damaged, thereby improving discomfort, instability, poor acoustic effect, and other technical problems. The pullout resistance between the ear hook assembly 20 and the compartment body assembly 10 is within a range of 0.45 kgf to 5.7 kgf, taking into account the reliability and wear and tear of the connection between the two. If the pullout resistance is too small, although it may delay the wear and tear of the connection between the compartment body assembly 10 and/or the ear hook assembly 20 to a certain extent, there is also a natural problem that the connection between the two is not reliable. If the pullout resistance is too large, although it is easy to ensure the reliability of the connection between the two, it is also prone to problems such as not being easy for the user to assemble and disassemble, and excessive wear and tear at the connection between the compartment body assembly 10 and the ear hook assembly 20.

It is to be noted that the pullout resistance described in the present disclosure is used to characterize the difficulty for the user to separate the ear hook assembly 20 from the compartment body assembly 10, i.e., the smaller the pullout resistance is, the easier it is for the user to pull out the ear hook assembly 20, and the larger the pullout resistance is, the more difficult it is for the user to pull out the ear hook assembly 20. Based on this, the present disclosure may measure the pullout resistance by the following method. For example, the compartment body assembly 10 is fixed on the fixing platform of the dynamometer. The test end of the dynamometer is fixed on an end of the ear hook assembly 20 connected to the compartment body assembly 10. Then, an external force is applied on the ear hook assembly 20 by the dynamometer to pull out the ear hook assembly 20. Finally, a maximum pullout resistance (i.e., as the aforesaid pullout resistance) is recorded, i.e., the user requires the recorded pulling force to pull out the ear hook assembly 20. In this case, taking into account the testing error, an average value of the maximum pullout resistances may be taken as the pullout resistance after several measurements (e.g. Three measurements).

Further, one of the compartment body assembly 10 and the ear hook assembly 20 is provided with a fixing block 15, another one of the compartment body assembly and the ear hook assembly is provided with a groove 23 for accommodating the fixing block 15. When the ear hook assembly 20 is connected with the compartment body assembly 10, the fixing block 15 is located within the groove 23 to cause the ear hook assembly 20 to be connected to the compartment body assembly 10. The fixing block 15 may be provided in the compartment body assembly 10, for example, when the fixing block 15 is connected with the housing 11, the fixing block 15 may protrude out of the housing 11 or may be recessed inside the housing 11. The fixing block 15 may also be located in the ear hook assembly 20, for example, the fixing block 15 serves as one end of the ear hook assembly 20, in which case the fixing block 15 has the same or similar structure as the second connection portion 22.

In the related technology, the ear hook assembly 20 and the compartment body assembly 10 are set to rotate relative to each other, and a torsion spring-like elastic member makes the ear hook assembly 20 and the compartment body assembly 10 hold the ear of the user. In order to wear the headphone stably, the torsion spring-like elastic member tends to exert a larger elastic force, resulting in discomfort when the user wears the headphone for a long time. In this regard, the fixing block 15 may be set to be non-rotatable within the groove 23, i.e., the ear hook assembly 20 is not rotatable relative to the compartment body assembly 10 after being connected with the compartment body assembly 10. At this time, the flexible structure 21 (which may include an elastic wire and an elastic overlay covering at least a portion of the elastic wire) of the ear hook assembly 20 is capable of deformation in the wearing state. Such deformation not only enables the ear hook assembly 20 to clamp the ear of the user with the compartment body assembly 10 but also enables the ear hook assembly 20 to better fit with the rear side of the ear to generate sufficient friction to satisfy the wearing stability.

Exemplarily, in an insertion and extraction direction of the fixing block 15 extends into or exits from the groove 23, the cross-section of at least a portion of the fixing block 15 in a reference cross-section perpendicular to the insertion and extraction direction is non-circular, such as a square, rectangle, ellipse regular shape or other irregular shape. The groove 23 may be provided in a structure matching the fixing block 15 to allow the fixing block 15 to extend into the groove 23, and the two to be non-rotatable after the fixing block 15 extends into the groove 23. Certainly, in some other embodiments, the cross-sectional shape of the fixing block 15 may be circular, and the fixing block 15 may be limited by a limiting structure such as a limiting member 142, a first limiting structure 145, or the like. The same or similar technical effect may also be realized.

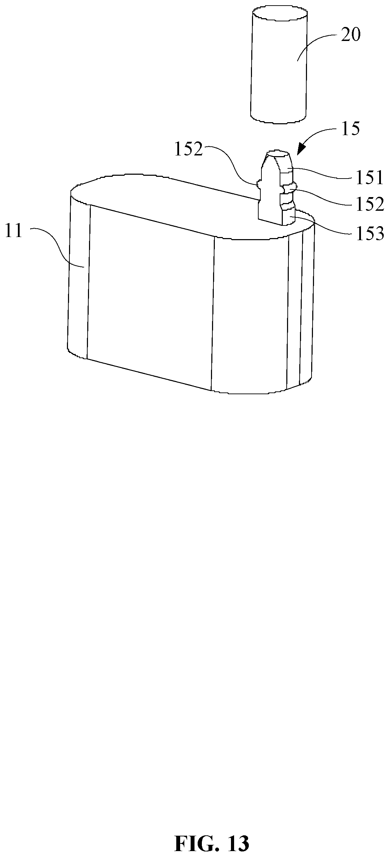

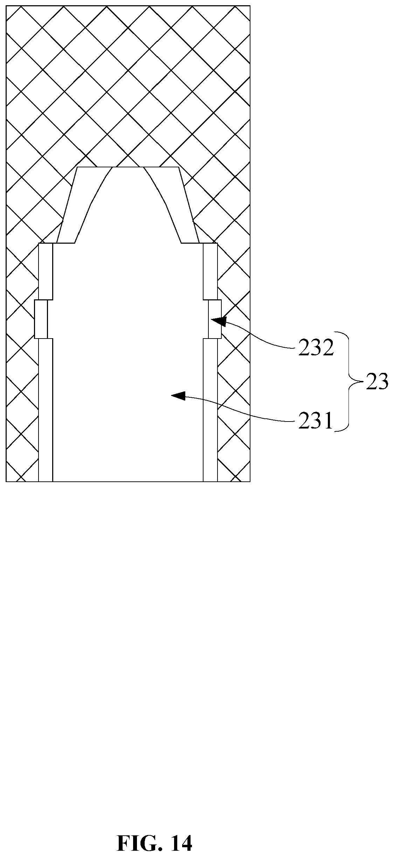

Exemplarily, in conjunction with FIG. 13 and FIG. 14, the fixing block 15 may include a main portion 151 and a flange portion 152 connected with the main portion 151. the cross-section of the main portion 151 in a reference cross-section in a direction perpendicular to the insertion and extraction direction may be a regular shape such as a square, a rectangle, an oval, or other irregularly shape such as a non-circular shape. The flange portion 152 protrudes from the main portion 151 in a direction perpendicular to the insertion and extraction direction to cause the area of the cross-section of the fixing block 15 to vary at different positions. The insertion and extraction direction is a direction in which the fixing block 15 extends into or exits from the groove 23. Correspondingly, the groove 23 may include a main groove portion 231 for accommodating the main portion 151 and a secondary groove portion 232 for accommodating the flange portion 152. The main groove portion 231 may be provided in a structure matching the main portion 151, and the secondary groove portion 232 may be provided in a structure matching the flange portion 152. In this way, the main portion 151 may be provided in the main groove portion 231 and the flange portion 152 may be provided in the secondary groove portion 232 when the ear hook assembly 20 is connected with the compartment body assembly 10, to cause the fixing block 15 and the groove 23 to form a snap-fit removable structure, and the fixing block 15 is not rotatable within the groove 23. The flange portion 152 generates a sliding friction with at least an inner wall surface of the secondary groove portion 232 during the process of the fixing block 15 extending into or exiting from of the groove 23.

Further, the fixing block 15 may include a long axis direction and a short axis direction that are perpendicular to the insertion and extraction direction and orthogonal to each other. The dimension of the main portion 151 in the long axis direction is larger than a dimension of the main portion 151 in the short axis direction. The flange portion is provided on each side of the main portion in the long axis direction, to increase the symmetry of the snap-fit between the fixing block 15 and the groove 23 to avoid the ear hook assembly 20 from jamming during the insertion and extraction process. The flange portion 152 on each side of the main portion 151 may be symmetrically provided about the insertion and extraction direction.

Further, the compartment body assembly 10 may include a housing 11 and a transducer 12 provided within the housing 11. The housing 11 is provided with one or more sound outlet holes on the inner side toward the ear in the wearing state. The acoustic wave generated by the transducer 12 after being energized is propagated to the exterior of the ear through the sound outlet holes on the housing 11. Based on this, the fixing block 15 may include a connection seat 153 connecting the main portion 151 and the housing 11, i.e., the fixing block 15 is provided in the compartment body assembly 10. At this time, one end of the ear hook assembly 20 is provided with a groove 23. The dimension of the connection seat 153 in the long axis direction is larger than the dimension of the main portion 151 in the long axis direction. A beveled surface such as a chamfered angle or a rounded angle is provided between the connection seat 153 and the main portion 151 to guide sweat to flow out along the beveled surface. It is conducive to avoiding sweat accumulating on the side of the connection seat 153 toward the main portion 151, and is more conducive to preventing sweat from invading the groove 23, thereby avoiding the accumulation of sweat and odor. In addition, the connection seat 153 is thicker compared to the main portion 151, which is more conducive to increasing the structural strength of the fixing block 15. The beveled surface is also conducive to alleviating the stress concentration between the connection seat 153 and the main portion 151.

Further, the free end of the main portion 151 that is not connected with the connection seat 152 is provided with a beveled surface such as a chamfered angle or a rounded angle to guide the fixing block 15 to extend into the groove 23.

It should be noted that, in the embodiments illustrated in FIG.13 and FIG. 14, the fixing block 15 extends into or exits from the groove 23, mainly relying on an insertion and extraction force exerted by the user along the insertion and extraction direction, which overcomes the interference force between the fixing block 15 and the groove 23, causing the structure to be elastically deformed. Based on this, the corresponding pullout resistance may be obtained by designing the elastic modulus of the fixing block 15 and groove 23, a first radial dimension difference of the flange portion 152 protruding relative to the main portion 151 in the direction perpendicular to the insertion and extraction direction, a second radial dimension difference of the secondary groove portion 232 recessed relative to the main portion 151 in the direction perpendicular to the insertion and extraction direction, a difference between the first radial dimension difference and the second radial dimension difference, an axial dimension of the flange portion 152 in the insertion and extraction direction, etc. Furthermore, a plurality of flange portions 152 may be arranged at intervals on the main portion 151, for example, two, three, etc., along the insertion and extraction direction, to increase the pullout resistance.

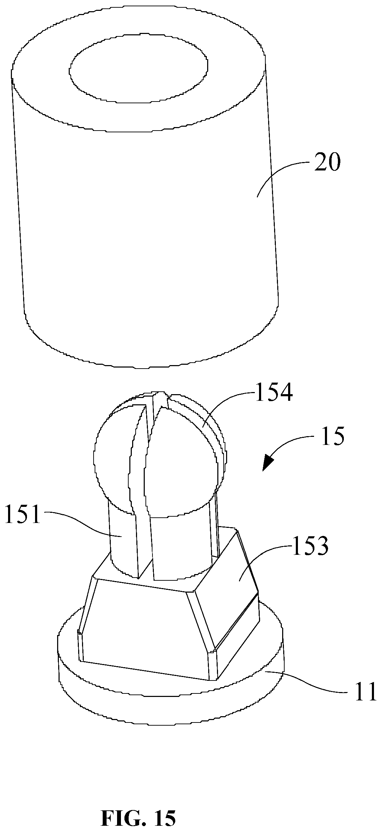

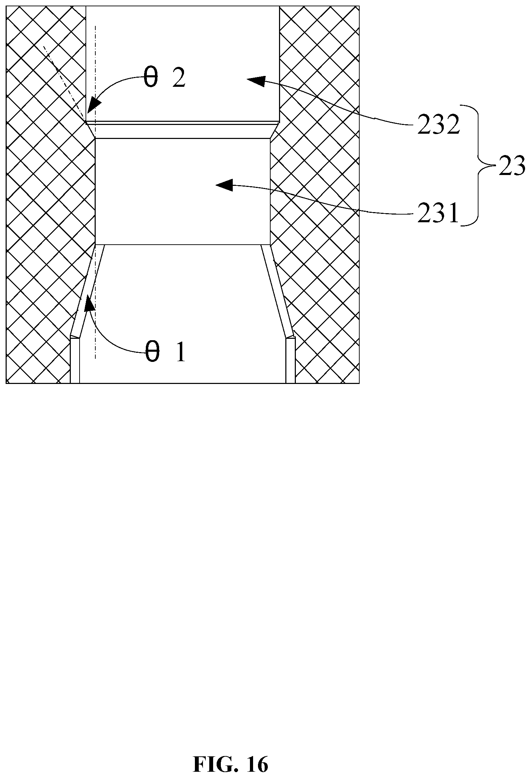

Exemplarily, in conjunction with FIG. 15 and FIG. 16, the fixing block 15 may include a main portion 151 and one or more ball heads 154 connected with the main portion 151. The dimension of each of at least a portion of the ball heads 154 in a direction perpendicular to the insertion and extraction direction is larger than the dimension of the main portion 151 in the direction perpendicular to the insertion and extraction direction, to cause the area of the cross-section of the fixing block 15 to be different at different positions. The insertion and extraction direction is a direction in which the fixing block 15 extends into or exits from the groove 23. Further, at least a plurality of ball heads 154 of the main portion 151 and the ball heads 154 are arranged at intervals in the direction around the insertion and extraction direction. For example, four main portions 151 and four ball heads 154 in FIG. 15 are both arranged at intervals in a direction around the insertion and extraction direction so that the ball heads 154 and the main portions 151 form a cantilevered structure relative to a structure (e.g., the compartment body assembly 10 or the ear hook assembly 20) connected with the fixing block 15. Correspondingly, the groove 23 may include a main groove portion 231 for accommodating the main portion 151 and a secondary groove portion 232 for accommodating the ball heads 154. The main groove portion 231 may be provided in a structure matching the main portion 151, and the secondary groove portion 232 may be provided in a structure matching the ball heads 154. In this way, in order to have the main portion 151 located in the main groove portion 231 and the ball heads 154 located in the secondary groove portion 232 when the ear hook assembly 20 is connected to the compartment body assembly 10, to make the fixing block 15 and the groove 23 form a snap-fit removable structure. During the process of the fixing block 15 extending into or exiting from the groove 23, the ball heads 154 generate a sliding friction with at least the inner wall surface of the secondary groove portion 232, and the ball heads 154 originally spaced and cantilevered come closer to each other during the insertion and extraction process.

Similarly, the compartment body assembly 10 may include a housing 11 and a transducer 12 provided within the housing 11. The housing 11 is provided with one or more sound outlet holes on the inner side toward the ear in the wearing state. The acoustic wave generated by the transducer 12 after being energized is propagated to the exterior of the ear through the sound outlet holes on the housing 11. Based on this, the fixing block 15 may include a connection seat 153 connecting the main portion 151 and the housing 11. The cross-section of the connection seat 153 in a reference cross-section perpendicular to the insertion and extraction direction is a regular shape such as a square, rectangle, oval, etc., or other irregular shapes such as a non-circular shape. At this point, the ear hook assembly 20 is provided with a groove 23 at one end. In such a way, the fixing block 15 is not rotatable within the groove 23 when the ear hook assembly 20 is connected with the compartment body assembly 10.

Further, the dimension of the connection seat 153 in a direction perpendicular to the insertion and extraction direction is larger than the dimension of the main portion 151 in a direction perpendicular to the insertion and extraction direction. For example, the cross-sections of the main portion 151 and the connection seat 153 are respectively circle and square, which is conducive to increasing the structural strength of the fixing block 15. An end of the connection seat 153 connected with the main portion 151 is provided with a beveled surface such as a chamfered angle or a rounded angle. The beveled surface makes a smaller area of a cross-section of the end of the connection seat 153 in the insertion and extraction direction near the main portion 151 smaller, to guide the sweat to flow out along the beveled surface. It is conducive to avoiding sweat accumulating on the side of the connection seat 153 toward the main portion 151, and is more conducive to preventing sweat from invading the groove 23, thereby avoiding the accumulation of sweat and odor. In addition to this, the beveled surface is also conducive to alleviating the stress concentration between the connection seat 153 and the main portion 151.

It should be noted that, in the embodiments illustrated in FIG. 15 and FIG. 16, the fixing block 15 extends into or exits from the groove 23, mainly relying on an insertion and extraction force exerted by the user along the insertion and extraction direction, which overcomes the interference force between the fixing block 15 and the groove 23, causing the structure to be elastically deformed. Based on this, the corresponding pullout resistance may be obtained by designing the elastic modulus of the fixing block 15 and the groove 23, a first radial dimension of the ball heads 154, a second radial dimension of the main groove portion 231 in the insertion and extraction direction, a difference between the first radial dimension and the second radial dimension (i.e., the amount of overstressing), a length of the cantilevered structure formed by the ball heads 154 and the main portion 151 relative to the connection seat 153, etc. Table 1 below reflects a magnitude relationship between an average value of the pullout resistance and the second radial dimension of the main groove portion 231 when the material, the size, the length, etc., of the ball heads 154 are the same.

**Table 1:**

| Serial number | First radial dimension/mm | Second radial dimension/mm | Average value of the pullout resistance/kgf |
|---|---|---|---|
| 1 | 4 | 3.76 | 0.64 |
| 2 | 4 | 3.56 | 1.88 |
| 3 | 4 | 3.36 | 4.43 |

Further, the ball heads 154 cooperate with the main groove portion 231 such that the pullout resistance between the fixing block 15 and the groove 23 may be within a range of 0.5 kgf to 4.5 kgf.

Further, an engaging angle (e.g., shown as 01 in FIG. 16) and a disengaging angle (e.g., shown as θ2 in FIG. 16),may be respectively formed at both end of the main groove portion 231 in the insertion and extraction direction described above. At this time, during the process of the fixing block 15 extending into the groove 23, the ball heads 154 act first on the end where the engaging angle is located. During process of the fixing block 15 exiting from the groove 23, the ball heads 154 act first on the other end where the disengaging angle is located. Thus, different sizes of the engaging angle enable the user to obtain different insertion damping, and different sizes of the disengaging angle enable the user to obtain different extraction damping. Further, the engaging angle may be smaller than the disengaging angle to enable the user to obtain different insertion and extraction damping. For example, the engaging angle may be within a range of 10° to 20° and the disengaging angle may be within a range of 25° to 35°.

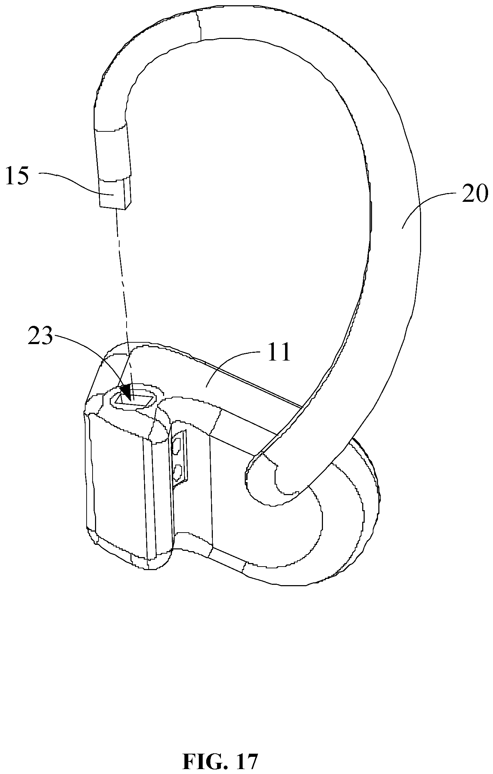

Exemplarily, in conjunction with FIG. 17, a first permanent magnet may be provided within the fixing block 15, and a second permanent magnet may be provided within the groove 23. When the ear hook assembly 20 is connected with the compartment body assembly 10, the fixing block 15 extends into the groove 23, and the magnetic poles of the first permanent magnet and the second permanent magnet are different at one end opposite to each other, to form a detachable structure of magnetic suction fit. The first permanent magnet may be at least partially internalized in the fixing block 15 or at least partially exposed in the fixing block 15. The second permanent magnet may be at least partially invisible in the groove 23 or at least partially visible within the groove 23.

Similarly, the compartment body assembly 10 may include a housing 11 and a transducer 12 provided within the housing 11, the housing 11 is provided with one or more sound outlet holes on the inner side toward the ear in the wearing state. The acoustic wave generated by the transducer 12 after being energized is propagated to the exterior of the ear through the sound outlet holes on the housing 11. Based on this, the groove 23 may be provided on the housing 11. One end of the ear hook assembly 20 may be provided with a fixing block 15. For example, the fixing block 15 serves as one end of the ear hook assembly 20. The cross-section of the fixing block 15 in a reference cross-section perpendicular to the insertion and extraction direction is of a regular shape such as a square, a rectangle, an ellipse, or other irregular shapes such as a non-circular shape, and the groove 23 may be configured as a structure matching the fixing block 15. In such a case, the fixing block 15 is non-rotatable within the groove 23 when the ear hook assembly 20 is connected with the compartment body assembly 10. Furthermore, a small gap between the fixing block 15 and the groove 23 may lead to unnecessary friction between the fixing block 15 and the inner wall of the groove 23 during extending into or exiting from the groove 23. The large gap between the fixing block 15 and the groove 23 may cause the fixing block 15 to shake unnecessarily with the groove 23 after being extended into the groove 23. Therefore, a unilateral gap between the fixing block 15 and the groove 23 may be within a range of 0.1 mm to 0.3 mm.

It should be noted that, in the embodiment shown in FIG. 17, the fixing block 15 extends into or exits from the groove 23, mainly relying on an insertion and extraction force applied by the user along the insertion and extraction direction, which overcomes the magnetic attraction between the first permanent magnet and the second permanent magnet. Based on this, the corresponding pullout resistance may be obtained by designing the materials, shapes, sizes, etc., of the first permanent magnet and the second permanent magnet. Table 2 below reflects magnitude relationships between an average value of the pullout resistance and lengths of the first permanent magnet and the second permanent magnet when the material and the area of the cross-section of the first permanent magnet and the second permanent magnet are the same. The first permanent magnet and the second permanent magnet have the same area of the cross-section, which is denoted as a cross-sectional area, and the lengths of the first permanent magnet and the second permanent magnet are the same, which is denoted as the length.

**Table 2:**

| Serial number | Cross-sectional area/mm×mm | Length/mm | Average value of pullout resistance/kgf |
|---|---|---|---|
| 1 | 3×3 | 4.0 | 0.46 |
| 2 | 3×3 | 5.0 | 056 |
| 3 | 3×3 | 6.0 | 0.60 |
| 4 | 3×3 | 6.5 | 0.67 |

Further, the first permanent magnet cooperates with the second permanent magnet such that the pullout resistance between the fixing block 15 and the groove 23 may be within a range of 0.45 kgf to 0.7 kgf.

Based on the above detailed description, in the embodiments shown in FIG. 13 to FIG. 17, the main purpose is to make the pullout resistance between the ear hook assembly 20 and the compartment body assembly 10 within a reasonable range, mainly by designing the structure related to the fixing block 15 and the groove 23, , thereby taking into account the reliability and wear of the connection between the ear hook assembly 20 and the compartment body assembly 10. In addition to this, the present disclosure further changes the principle of the detachable connection between the ear hook assembly 20 and the compartment body assembly 10, which may also reduce the wear and tear during the assembling or disassembling process of the ear hook assembly 20 and the compartment body assembly 10, under the premise of ensuring the connection of the ear hook assembly 20 and the compartment body assembly 10. Detailed descriptions are as follows.

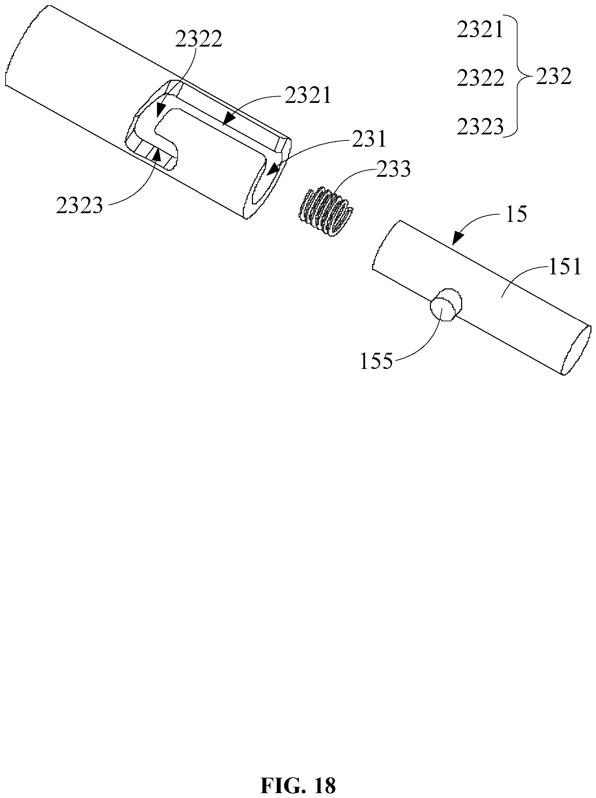

Exemplarily, in conjunction with FIG. 18, the headphone 100 may include a compartment body assembly 10 and an ear hook assembly 20 detachably connected with the compartment body assembly 10. The compartment body assembly 10 is configured to contact the front side of the ear of the user, and at least part of the ear hook assembly 20 is configured to be hung between the rear side of the ear and the head of the user. One of the compartment body assembly 10 and the ear hook assembly 20 may be provided with a fixing block 15, and the other one of the compartment body assembly 10 and the ear hook assembly 20 is provided with a groove 23 for accommodating the fixing block 15. Similarly, the fixing block 15 may be provided in the compartment body assembly 10. For example, the fixing block 15 is connected with the housing 11 so that the fixing block 15 may either protrude out of the housing 11 or be recessed inside the housing 11. The fixing block 15 may be provided in the ear hook assembly 20, for example, the fixing block 15 is one end of the ear hook assembly 20.

Further, the fixing block 15 may include a main portion 151 and a limiting portion 155 connected with the main portion 151. The limiting portion 155 protrudes from a lateral direction of the main portion 151. The groove 23 may include a main groove portion 231 for accommodating the main portion 151 and a secondary groove portion 232 for accommodating the limiting portion 155. The main groove portion 231 is provided with an elastic member 233, such as a spring. In such a case, during the extension process of the fixing block 15 into the groove 23, the main portion 151 moves within the main groove portion 231 and compresses the elastic member 233, and the limiting portion 155 moves within the secondary groove portion 232 and resists against the end of the secondary groove portion 232 with the elastic support of the elastic member 233. In other words, the limiting portion 155 and the secondary groove portion 232 cooperate to form a trajectory of movement of the fixing block 15 within the groove 23. Thus, the fixing block 15 may move and rotate within the groove 23. In order to facilitate the limiting portion 155 to finally abut against the end of the secondary groove portion 232, the shape of the secondary groove portion 232 is preferably set into a non-linear structure such as a curve, or a fold line.

In the above manner, there is no need to overcome the interference force between the fixing block 15 and the groove 23 during the process of the fixing block 15 extending into or exiting from the groove 23, so that the fixing block 15 has less (or even no) friction with the inner wall surface of the groove 23, thus contributing to reducing the wear and tear between the fixing block 15 and the groove 23.

Exemplarily, the secondary groove portion 232 may include a first groove section 2321, a second groove section 2322, and a third groove section 2323 connected in sequence. The second groove section 2322 is bent relative to the first groove section 2321, and the third groove section 2323 is bent relative to the second groove section 2322, such that the third groove section 2323 and the first groove section 2321 extend in the same direction relative to the second groove section 2322. The length of the third groove section 2323 along a reference axis is less than the length of the first groove section along the reference axis. The reference axis may be parallel to an extension direction of the first groove section 2321 or the third groove section 2323. When the main portion 151 is provided as a columnar structure, the reference axis may be an axis of the main portion 151. In this way, during the extension of the fixing block 15 into the groove 23, the limiting portion 155 first moves in the first groove section 2321 along the reference axis, the main portion 151 compresses the elastic member 233, and the limiting portion 155 later moves around the reference axis within the second groove section 2322. The limiting portion 155 then moves along the reference axis within the third groove section 2323, and the elastic member 233 causes the limiting portion 155 to abut against an end of the third groove section 2323 away from the second groove section 2322.

Further, the extension directions of the first groove section 2321 and the third groove section 2323 may be provided in parallel to reduce the angle of rotation of the fixing block 15 relative to the groove 23. An angle between the first groove section 2321 and the second groove section 2322 is greater than an angle between the third groove section 2323 and the second groove section 2322. Thus, during the exit of the groove 23 and after the limiting portion 155 enters the second groove section 2322, the elastic member 233 may directly eject the fixing block 15.

Similarly, the compartment body assembly 10 may include a housing 11 and a transducer 12 disposed within the housing 11. The housing 11 is provided with one or more sound outlet holes on the inner side toward the ear in the wearing state, and the acoustic wave generated by the transducer 12 after being energized is propagated to the exterior of the ear through the sound outlet holes on the housing 11. Based on this, the fixing block 15 may be provided on the housing 11, for example, protruding out of the housing 11, and one end of the ear hook assembly 20 may be correspondingly provided with a groove 23.

It should be noted that, in the embodiment illustrated in FIG. 18, the structural failure occurs mainly at the end of the ear hook assembly 20 provided with the groove 23. To this end, Table 3 below reflects t a magnitude relationship between a tensile force and a radial dimension of the main portion 151 under parameters such as the same unilateral gap between the main portion 151 and the main groove portion 231, the same material of the fixing block 15 and the ear hook assembly 20, the same wall thickness of the ear hook assembly 20 at the groove 23, etc. The tensile force described in the present disclosure is used to characterize the reliability of the end of the ear hook assembly 20 provided with the groove 23, i.e., the smaller the tensile force, the worse the reliability of the ear hook assembly 20, and the larger the tensile force, the better the reliability of the ear hook assembly 20. Based on this, the present disclosure may measure the tensile force by the following method. First, the fixing block 15 is extended into the groove 23. Second, the compartment body assembly 10 is fixed on the fixing table of the dynamometer, and the test end of the dynamometer is fixed on an end where the ear hook assembly 20 is connected to the compartment body assembly 10. Then, an external force is applied on the ear hook assembly 20 through the dynamometer to make the ear hook assembly 20 and the compartment body assembly 10 separated, and the maximum pulling force (i.e., the aforementioned tensile force) is recorded.

**Table 3:**

| Serial number | Radial dimension/mm | Tensile strength/kgf |
|---|---|---|
| 1 | ϕ1.6 | 0.63 |
| 2 | ϕ1.8 | 043 |
| 3 | ϕ2.0 | 0.56 |
| 4 | ϕ2.5 | 1.93 |
| 5 | ϕ4.8 | 5.71 |

Furthermore, the secondary groove portion 232 allows the tensile force of the ear hook assembly 20 at the end where the groove 23 is located to be within a range of 0.6 kgf to 5.7 kgf.

The foregoing is only a part of the embodiments of the present disclosure, and is not intended to limit the scope of protection of the present disclosure. Any equivalent device or equivalent process transformations utilizing the contents of the present disclosure and the accompanying drawings, or applying them directly or indirectly in other related technical fields, are similarly included in the scope of patent protection of the present disclosure. All of them are similarly included in the scope of patent protection of the present disclosure.

## Claims

1. A headphone, comprising:
a compartment body assembly and an ear hook assembly, wherein:
the compartment body assembly is configured to contact a front side of an ear of a user,
at least a portion of the ear hook assembly is provided between a rear side of the ear and a head of the user, wherein:
the ear hook assembly is detachably connected with the compartment body assembly and a pullout resistance between the ear hook assembly and the compartment body assembly is within a range of 0.45 kgf to 5.7 kgf.

2. The headphone of claim 1, wherein one of the compartment body assembly and the ear hook assembly is provided with a fixing block, another one of the compartment body assembly and the ear hook assembly is provided with a groove for accommodating the fixing block, and the fixing block is located in the groove when the ear hook assembly is connected with the compartment body assembly.

3. The headphone of claim 2, wherein the fixing block is not rotatable within the groove.

4. The headphone of claim 2, wherein in an insertion and extraction direction of the fixing block extends into or exits from the groove, a cross-section of at least a portion of the fixing block in a reference cross-section perpendicular to the insertion and extraction direction is non-circular.

5. The headphone of claim 4, wherein the fixing block includes a main portion and a flange portion connected with the main portion,
a cross-section of the main portion in the reference cross-section is non-circular,
the flange portion protrudes from the main portion in a direction perpendicular to the insertion and extraction direction, and
the groove includes a main groove portion for accommodating the main portion and a secondary groove portion for accommodating the flange portion, and the main portion is located in the main groove portion and the flange portion is located in the secondary groove portion when the ear hook assembly is connected with the compartment body assembly.

6. The headphone of claim 5, wherein the fixing block includes a long axis direction and a short axis direction perpendicular to the insertion and extraction direction and orthogonal to each other,
a dimension of the main portion in the long axis direction is larger than a dimension of the main portion in the short axis direction, and
the flange portion is provided on each side of the main portion in the long axis direction.

7. The headphone of claim 6, wherein the compartment body assembly includes a housing and a transducer provided within the housing,
the fixing block includes a connection seat connecting the main portion and the housing,
a dimension of the connection seat in the long axis direction is larger than the dimension of the main portion in the long axis direction,
a chamfered angle or a rounded angle is provided between the connection seat and the main portion, and
an end of the ear hook assembly is provided with the groove.

8. The headphone of claim 4, wherein the fixing block includes a main portion and one or more ball heads connected with the main portion,
a dimension of each of at least a portion of the one or more ball heads in a direction perpendicular to the insertion and extraction direction is larger than a dimension of the main portion in the direction perpendicular to the insertion and extraction direction,
among the main portion and the one or more ball heads, at least a plurality of ball heads are arranged at intervals in a direction around the insertion and extraction direction,
the groove includes a main groove portion for accommodating the main portion and a secondary groove portion for accommodating the ball head,
the main portion is provided in the main groove portion, and
the ball head is provided in the secondary groove portion when the ear hook assembly is connected with the compartment body assembly.

9. The headphone of claim 8, wherein the one or more ball heads cooperate with the main groove portion such that a pullout resistance between the fixing block and the groove is within a range of 0.5kgf to 4.5kgf.

10. The headphone of claim 8, wherein an engaging angle and a disengaging angle are formed at two ends of the main groove portion in the insertion and extraction direction, respectively, and the engaging angle is smaller than the disengaging angle, wherein:
the ball head first acts on one end where the engaging angle is located during the fixing block extending into the groove, and
the ball head first acts on another end where the disengaging angle is located during f the fixing block exiting from the groove.

11. The headphone of claim 8, wherein the compartment body assembly includes a housing and a transducer provided within the housing, and the fixing block includes a connection seat connecting the main portion and the housing, and a cross-section of the connection seat in the reference cross-section is non-circular, and one end of the ear hook assembly is provided with the groove.

12. The headphone of claim 11, wherein a beveled surface is provided at an end where the connection seat is connected with the main portion, the beveled surface makes a small cross-section of an end of the connection seat near the main portion in the insertion and extraction direction.

13. The earphone of claim 4, wherein the fixing block is provided with a first permanent magnet, the groove is provided with a second permanent magnet, and magnetic poles of the first permanent magnet and the second permanent magnet are different from each other at one end opposite to each other when the ear hook assembly is connected with the compartment body assembly.

14. The headphone of claim 13, wherein the first permanent magnet cooperates with the second permanent magnet such that a pullout resistance between the fixing block and the groove is within a range of 0.45 kgf to 0.7 kgf.

15. The headphone of claim 13, wherein the compartment body assembly includes a housing and a transducer provided within the housing, the groove is provided in the housing, and the fixing block is provided at one end of the ear hook assembly.

16. The headphone of claim 1, wherein the headphone includes at least two the ear hook assemblies, and the at least two ear hook assemblies are set into curved structures with different curvature radii to adapt to ears of different users.

17. A headphone including a compartment body assembly and an ear hook assembly detachably connected with the compartment body assembly, wherein the compartment body assembly contacts a front side of an ear of a user, and at least a portion of the ear hook assembly hooks between a rear side of the ear and between a head of the user, wherein:
one of the compartment body assembly and the ear hook assembly is provided with a fixing block,
another one of the compartment body assembly and the ear hook assembly is provided with a groove for accommodating the fixing block,
the fixing block includes a main portion and a limiting portion connected with the main portion,
the groove includes a main groove portion for accommodating the main portion and a secondary groove portion for accommodating the limiting portion,
the main groove portion is provided with an elastic member, and
during the fixing block extending into the groove, the main portion moves within the main groove portion and compresses the elastic member, and the limiting portion moves within the secondary groove portion and abuts against an end of the secondary groove portion with an elastic support of the elastic member.

18. The headphone of claim 17, wherein the secondary groove portion includes a first groove section, a second groove section, and a third groove section connected in sequence, the second groove section is bent relative to the first groove section, the third groove section is bent relative to the second groove section, and a length of the third groove section along a reference axis is less than a length of the first groove section along the reference axis;, wherein:
during the fixing block extending into the groove,
the limiting portion first moves within the first groove section along the reference axis,
the main portion compresses the elastic member,
the limiting portion later moves within the second groove section around the reference axis,
the limiting portion then moves within the third groove section along the reference axis, and
the elastic member causes the limiting portion to abut against an end of the third groove section away from the second groove section.

19. The headphone of claim 18, wherein the compartment body assembly includes a housing and a transducer provided within the housing, the fixing block is provided on the housing, an end of the ear hook assembly is provided with the groove, and the secondary groove portion makes a tensile force of the ear hook assembly at the end where the groove is located is within a range of 0.6 kgf to 5.7 kgf.
